# EUROPÄISCHE PATENTANMELDUNG

(11) **EP 1 383 221 A2**
(43) Veröffentlichungstag der Anmeldung: **21.01.2004**
(21) Anmeldenummer: 03015276.3
(22) Anmeldetag: 07.07.2003
(51) Int. Cl.: H02J 3/00

(54) **Verfahren zur Versorgung einer entfernt angeordneten, variablen Last mit einer konstanten Wechselspannung**

(30) Priorität: 15.07.2002 DE 10232074
(71) Anmelder: RWE Piller GmbH, 37520 Osterode am Harz (DE)
(72) Erfinder: Engelhardt, Reinhard, 37115 Duderstadt (DE); Leschke, Stephan, 37431 Bad Lauterberg im Harz (DE)
(74) Vertreter: Patentanwälte Rehberg + Hüppe

(57) **Zusammenfassung**

Zur Versorgung einer entfernt von einer Spannungsquelle (3) angeordneten, variablen Last (1) mit einer konstanten Wechselspannung wird ein Spannungsabfall über eine elektrische Zuleitung (2), die die Last mit der Spannungsquelle (3) verbindet, durch eine Kompensationswechselspannung kompensiert, die zu der konstanten Wechselspannung hinzuaddiert die Ausgangswechselspannung U _{ges} der Spannungsquelle (3) ergibt und deren Höhe in Abhängigkeit von dem Betrag des zu der Last (1) fließenden Wechselstroms (1) und in Abhängigkeit von dem Phasenwinkel phi zwischen der Ausgangswechselspannung U_{ges} der Spannungsquelle (3) und dem Wechselstrom (I) variiert wird.

## Beschreibung

### STAND DER TECHNIK

Die Erfindung bezieht sich auf ein Verfahren zur Versorgung einer entfernt von einer Spannungsquelle angeordneten, variablen Last mit einer konstanten Wechselspannung, wobei ein Spannungsabfall über eine elektrischen Zuleitung, die die Last mit der Spannungsquelle verbindet, durch eine Kompensationswechselspannung kompensiert wird, die zu der konstanten Wechselspannung hinzuaddiert die Ausgangswechselspannung der Spannungsquelle ergibt und deren Höhe in Abhängigkeit von dem Betrag des zu der Last fließenden Wechselstroms variiert wird.

Wenn eine entfernt von einer Spannungsquelle angeordnete Last mit einer Wechselspannung versorgt wird, so kommt bei der Last nicht die gesamte Ausgangswechselspannung der Spannungsquelle an. Vielmehr wird ein erheblicher Spannungsabfall über eine elektrische Zuleitung beobachtet, die die Last mit der Spannungsquelle verbindet. Die relevanten Beiträge zu dem Spannungsabfall über der elektrischen Zuleitung machen deren ohmscher Widerstand und deren induktiver Wechselstromwiderstand aus. Grundsätzlich tritt auch noch ein kapazitiver Wechselstromwiderstand auf, welcher jedoch in vielen Anwendungen vernachlässigt werden kann. Der ohmsche Widerstand und der induktive Wechselstromwiderstand der Zuleitung sind nicht konstant, so dass sie nicht durch eine konstante Kompensationswechselspannung als notwendiger Zuschlag zu der gewünschten konstanten Wechselspannung an der Spannungsquelle kompensiert werden können. Sie variieren vielmehr mit dem Betrag des zu der Last fließenden Wechselstroms, da der Betrag des Spannungsabfalls aufgrund des ohmschen Widerstands |l| * R und der Betrag des Spannungsabfalls aufgrund des induktiven Widerstands |l| * ωL ist.

Es ist daher bei einem Verfahren der eingangs beschriebenen Art bekannt, dass zur Festlegung der Kompensationswechselspannung der Betrag des zu der Last fließenden Wechselstroms gemessen wird und mit einer einstellbaren Konstante multipliziert wird. Die einstellbare Konstante wird in Abhängigkeit von der Zuleitung festgelegt. Beispielsweise indem die Konstante bei null beginnend so lange hochgesetzt wird, bis an der Last die gewünschte konstante Wechselspannung anliegt. Dieses bekannte Verfahren berücksichtigt jedoch nicht, dass der Spannungsabfall über der Zuleitung aufgrund ihres ohmschen Widerstands und der Spannungsabfall über der Zuleitung aufgrund ihres induktiven Wechselstromwiderstands vektoriell addiert werden müssen, um den gesamten Spannungsabfall über der Zuleitung zu bestimmen, und dass auch dieser gesamte Spannungsabfall über der Zuleitung ein Vektor ist, so dass für eine ideale Kompensationsspannung auf ein geschlossenes Vektordreieck abzustellen ist, welches von dem Spannungsabfall über der Zuleitung, der Ausgangswechselspannung der Spannungsquelle und der Wechselspannung an der Last gebildet wird. Anders gesagt ist eine Festlegung der Kompensationswechselspannung ausschließlich in Abhängigkeit von dem Betrag des zu der Last fließenden Wechselstroms unzureichend, wenn eine Phasenwinkel phi zwischen dem zu der Last fließenden Wechselstrom und der Ausgangswechselspannung der Spannungsquelle variiert, weil dieser die Richtung der oben angesprochenen Vektoren verändert bzw. das Verhältnis des Realanteils zu dem Imaginäranteil der komplexen Wechselspannungsgrößen verschiebt.

Bei einem weiteren Verfahren der eingangs beschriebenen Art wird zusätzlich zu der Variation der Höhe der Kompensationswechselspannung in Abhängigkeit von dem Betrag des zu der Last fließenden Wechselstroms eine Kompensationskapazität mit der Zuleitung, die die Lasten der Spannungsquelle verbindet, in Reihe geschaltet, um deren induktiven Widerstand durch einen kapazitiven Widerstand soweit zu kompensieren, dass der Spannungsabfall über die elektrische Zuleitung nur noch von deren ohmschen Widerstand bestimmt wird, welcher allein von dem Betrag des zu der Last fließenden Wechselstroms abhängt. Der Phasenwinkel zwischen der Ausgangswechselspannung der Spannungsquelle und dem zu der Last fließenden Wechselstrom hängt jedoch von der Induktivität des Gesamtsystems ab, die sich in erheblichem Maße ändern kann. Damit ist es unmöglich, mit einer konstanten Kapazität diesen Phasenwinkel auf null zu setzen. Vielmehr sind nicht unerhebliche Gefahren mit der zusätzlichen, großen Kapazität in der Zuleitung zu der Last verbunden.

Als weiteres Verfahren zur Versorgung einer entfernt von einer Spannungsquelle angeordneten, variablen Last mit einer konstanten Wechselspannung, wobei ein Spannungsabfall über eine elektrische Zuleitung, die die Last mit der Spannungsquelle verbindet, durch eine Kompensationswechselspannung kompensiert wird, die zu der konstanten Wechselspannung hinzuaddiert die Ausgangswechselspannung der Spannungsquelle ergibt, wird die an der Last ankommende Wechselspannung gemessen und als Ist-Größe für die Regelung der Spannungsquelle verwendet. Dieses Verfahren führt unabhängig von allen Veränderungen des Gesamtsystems zu einer konstanten Wechselspannung an der Last. Es können jedoch Probleme auftreten, wenn Messleitungen, die ebenfalls zwischen der Spannungsquelle und der Last verlaufen, Störeinflüssen der Zuleitung ausgesetzt sind. Die Funktionsfähigkeit des bekannten Verfahrens geht ganz verloren, wenn eine dieser Messleitungen bricht.

### AUFGABE DER ERFINDUNG

Der Erfindung liegt die Aufgabe zugrunde, ein Verfahren der eingangs beschriebenen Art aufzuzeigen, mit dem die Kompensationswechselspannung so festgelegt wird, dass sie über einen größeren Bereich der Variabilität der Last zu einer konstanten Wechselspannung an der Last führt. Gleichzeitig soll dieses Verfahren leicht anzuwenden und zu implementieren sein.

### LÖSUNG

Erfindungsgemäß wird diese Aufgabe dadurch gelöst, dass bei einem Verfahren der eingangs beschriebenen Art die Höhe der Kompensationswechselspannung zusätzlich in Abhängigkeit von dem Phasenwinkel phi zwischen der Ausgangswechselspannung der Spannungsquelle und dem Wechselstrom variiert wird. Kerngedanke des neuen Verfahrens ist es also, die vetoriellen Eigenschaften des Spannungsabfalls über der Zuleitung durch den Phasenwinkel phi zu berücksichtigen. Der Phasenwinkel phi kann an der Spannungsquelle relativ problemlos bestimmt werden. Er ist beispielsweise dadurch zugänglich, dass an der Spannungsquelle ein Vektorprodukt zwischen der Ausgangswechselspannung und dem Wechselstrom und ein Skalarprodukt zwischen dem Betrag der Ausgangswechselspannung und dem Betrag des Wechselstroms gebildet wird. Dies kann durch punktweise Multiplikationen der zu einem Zeitpunkt vorliegenden Betragswerte einerseits bzw. der Effektivwerte der Ausgangswechselspannung und des Wechselstroms andererseits erreicht werden. Diese beiden Werte stehen für die elektrische Realleistung einerseits und die elektrische Scheinleistung andererseits.

### BESCHREIBUNG DER ERFINDUNG

Bei dem neuen Verfahren hat sich herausgestellt, dass es nicht entscheidend ist, den Phasenwinke phi in jeglichen Auswirkungen zu berücksichtigen. Vielmehr hat es sich als ausreichend erwiesen, dass die Kompensationswechselspannung zwei von dem Betrag des Wechselstroms linear abhängige Summanden aufweist, von denen der eine zusätzlich linear von cos(phi) und der andere zusätzlich linear von sin(phi) abhängt. Die beiden Summanden weisen neben den Faktoren |l| und cos(phi) bzw. sin(phi) jeweils eine Konstante auf, die an die jeweilige Zuleitung von der Spannungsquelle zu der Last abzustimmen ist. Die zu den Faktoren |l| und cos(phi) zugehörige Konstante C_{R} wird durch den ohmschen Widerstand der Zuleitung bestimmt. Sie kann bei dem neuen Verfahren relativ einfach dadurch gewonnen werden, dass bei einer ohmschen Last an der Stelle der variablen Last der Betrag der von der Spannungsquelle abgegebenen Ausgangswechselspannung |U_{ges}|, der Betrag der über der ohmschen Last abfallenden Wechselspannung |Uₗₐₛₜ| und der Betrag des dabei fließenden Wechselstroms |l| bestimmt werden. Durch die ohmsche Last an der Stelle der variablen Last wird der Phasenwinkel phi zwischen der Ausgangswechselspannung der Spannungsquelle und dem zu der Last fließenden Wechselstrom minimiert, d.h. phi geht gegen null. Damit geht der Beitrag des induktiven Widerstands der Zuleitung zu dem Spannungsabfall über der Zuleitung ebenfalls gegen null. Mit anderen Worten wird der Spannungsabfall über der Zuleitung nahezu ausschließlich durch Ihren ohmschen Widerstand bestimmt. Dies ermöglicht es, die Konstante CR aus den oben gemessenen Werten zu (|U_{ges}| - |U_{Last}|)/|l| zu bestimmen.

Die zweite, den Faktoren |l| und sin(phi) zugeordnete Konstante C_{L} steht für den induktiven Widerstand ωL der Zuleitung. Dieser Wert kann bei dem neuen Verfahren dadurch ermittelt werden, dass bei einer gemischten ohmschen und induktiven Last an der Stelle der variablen Last der Betrag der von der Spannungsquelle abgegebenen Ausgangswechselspannung |U_{ges}|, der Betrag der über der ohmschen Last abfallenden Wechselspannung |U_{Last}|, der Betrag des dabei fließenden Stroms |l| und der Phasenwinkel phi bestimmt werden. Die gemischte ohmsche und induktive Last an der Stelle der variablen Last kann auch die variable Last selbst sein. Wichtig ist, dass durch die gemischte ohmsche und induktive Last ein erheblicher Phasenwinkel phi verursacht wird, wie er im Betrieb der variablen Last auftreten kann. Aus den so gemessenen Werten kann die Konstante C_{L} zu [|U_{ges}| - |U_{Last}| - C_{R} * |l| * cos(phi)]/[|l| * sin(phi)] bestimmt werden. Während bei der Festlegung der Konstante C_{L} davon ausgegangen wurde, dass der Phasenwinkel phi durch die rein ohmsche Last an der Stelle der variablen Last vernachlässigbar klein ist, geht bei der Festlegung der Konstante C_{L} die Näherung ein, dass ein Phasenwinkel zwischen der Ausgangswechselspannung der Spannungsquelle und der Wechselspannung an der Last vernachlässigbar klein ist oder zumindest die Auswirkungen der Änderungen dieses Phasenwinkels insgesamt vernachlässigbar klein bleiben. Auch die Festlegung der Kompensationswechselspannung aus den beiden oben erläuterten Summanden, in die C_{R} und CL, eingehen, basiert auf eben dieser Annahme. Es stellt sich jedoch heraus, dass diese Annahme keine relevanten Fehler verursacht, d.h. trotz der enthaltenden Näherung ist die erzielbare Wechselspannung an der Last auch bei starken Änderungen der Last hervorragend konstant.

Dies gilt insbesondere dann, wenn zumindest die Konstante C_{L} bei einem Wert von |U_{Last}| festgelegt wird, der ungefähr gleich der gewünschten konstanten Wechselspannung ist. D.h., zumindest die Konstante C_{L}, vorzugsweise beide Konstanten C_{R} und C_{L}, werden unter betriebsnahen Bedingungen für die Zuleitung bestimmt, so dass sie beispielsweise auch die Eigenschaften der Spannungsquelle unter betriebsnahen Bedingungen berücksichtigen.

Da bei dem neuen Verfahren Messungen des Betrags der über der Last abfallenden Wechselspannung |U_{Last}| erforderlich sind, also Messungen an einem von der Spannungsquelle entfernten Ort, hat es sich als vorteilhaft erwiesen, dass die Konstanten C_{R} und C_{L} zunächst bei einem Wert von |U_{ges}| genähert werden, der ungefähr gleich der gewünschten konstanten Wechselspannung ist und dass dann mit den genäherten Werten die Kompensationsspannung festgelegt wird, um den Wert von |U_{Last}| anzufahren, der gleich der gewünschten konstanten Wechselspannung ist. Anschließend werden dann die endgültigen Werte von C_{R} und C_{L} bestimmt.

Wenn die Spannungsquelle ein rotierender Frequenzumformer ist, wird zur Variation der Kompensationswechselspannung die Erregerleistung eines Generators des rotierenden Frequenzumformers variiert. Die Variation der Erregerleistung des Generators variiert die Kompensationswechselspannung für alle Phasen der Spannungsquelle in gleicher Weise. Wenn die Zuleitung zu der Last für die einzelnen Phasen unterschiedliche Eigenschaften aufweist, muss insoweit ein Kompromiss getroffen werden. Es bietet sich an, die idealen Kompensationswechselspannungen für alle Phasen zu ermitteln und dann hierüber zu mitteln.

Bei einer Spannungsquelle in Form eines statischen Frequenzumformers oder eines elektronisch geregelten Transformators ist es hingegen möglich und auch sinnvoll, die Kompensationswechselspannung für jede Phase der Wechselspannung getrennt zu variieren. Damit können unterschiedliche Konditionen der Zuleitung für jede Phase voll berücksichtigt werden.

### KURZBESCHREIBUNG DER FIGUREN

Die Erfindung wird im Folgenden anhand eines Ausführungsbeispiels näher erläutert und beschrieben, dabei zeigt
**Fig. 1** ein Einleitungsschaubild einer Zuleitung zwischen einer Spannungsquelle und einer Last, und
**Fig. 2** die vektorielle Addition der Spannungsabfälle bei der Anordnung gemäß Fig. 1.

### FIGURENBESCHREIBUNG

Bis hierher wurde allgemein ausgeführt, dass es bei der Erfindung um die Versorgung einer entfernt angeordneten, variablen Last mit einer Wechselspannung geht, ohne näheres zu der Wechselspannung auszuführen. Die angesprochenen Probleme des Stands der Technik treten aber insbesondere bei Wechselspannungen höherer Frequenz auf, d.h. bei Frequenzen deutlich höher als 50 oder 60 Hz. Bei Leitungsnetzwechselspannungen von 50 oder 60 Hz sind die Effekte eines variierenden Phasenwinkels zwischen der Ausgangswechselspannung der Spannungsquelle und dem zu der Last fließenden Strom hingegen häufig nur gering. Ein technisches Gebiet jedoch, bei dem ganz erhebliche Auswirkungen des Phasenwinkels phi zu beobachten sind, ist die Stromversorgung von Flugzeugen am Boden. Flugzeuge am Boden werden über relativ lange Zuleitungen mit Spannungsquellen verbunden, die eine auf die elektrischen und elektronischen Einrichtungen der Flugzeuge abgestimmte Wechselspannung von 400 Hz abgeben. In diesem Frequenzbereich sind die angesprochenen Effekte ganz erheblich. Gleichzeitig ist es für die empfindlichen elektronischen Geräte an Bord eines Flugzeugs wichtig, dass die Spannungsversorgung mit konstanter Spannung von typischerweise 115 Volt erfolgt, wobei nur geringe Schwankungen von maximal ±3 Volt zulässig sind. Natürlich sind noch geringere Schwankungen erstrebenswert. Diese werden mit dem neuen Verfahren problemlos erreicht.

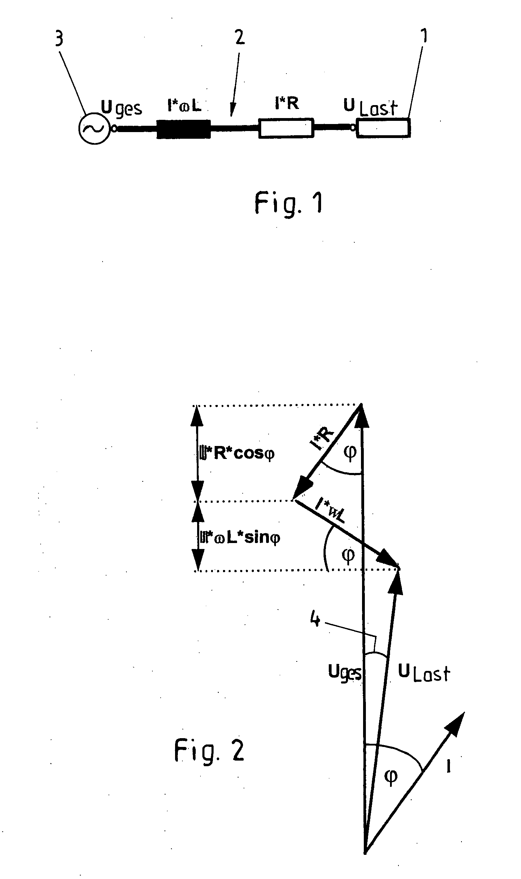

Fig. 1 skizziert eine Last 1, die über eine Zuleitung 2 an eine von der Last entfernte Spannungsquelle 3 angeschlossen ist. Dabei liegt an der Last 1 eine Spannung U_{Last} an, die von der Ausgangswechselspannung U_{ges} der Spannungsquelle 3 aufgrund der Leitungseigenschaften der Zuleitung 2 erheblich abweicht. Wesentlich gehen dabei der ohmsche Widerstand I*R und der induktive Widerstand I*ωL der Zuleitung 2 ein.

In Fig. 2 sind all diese Größen vektoriell aufgetragen. Die Vektordifferenz zwischen U_{ges} und U_{Last} weist die beiden Komponenten l*R und I*ωL auf. Diese beiden Komponenten verlaufen senkrecht zueinander. Weiterhin wird die Orientierung der Komponente l*R zu Uges durch den Phasenwinkel phi zwischen U_{ges} und dem zu der Last fließenden Strom l festgelegt. So kann sich auch bei konstanten Beträgen von |l| *R und |I|*ωL der Betrag |U_{Last}| mit dem Phasenwinkel phi erheblich ändern. Dies bedeutet umgekehrt, dass es für das Aufrechterhalten eines konstanten Werts von |U_{Last}| nicht ausreichend ist, |U_{ges}| mit einem Aufschlag zu variieren, der allein von |l| abhängt. Vielmehr muss auch der Phasenwinkel phi Berücksichtigung finden. Dies gilt natürlich insbesondere bei stärker schwankenden Werten von phi. Diese treten aber auf, wenn beispielsweise unterschiedliche Flugzeuge als Last 1 am Boden mit konstanter Wechselspannung versorgt werden sollen. Selbst bei ein und demselben Flugzeug kann sich durch unterschiedliche Aktivierung von elektrischen und elektronischen Aggregaten im Flugzeug, beispielsweise beim Einschalten einer elektrischen Klimaanlage, der Phasenwinkel phi stark verändern.

Um an der Spannungsquelle 3 zu einer für die Versorgung der Last 1 gewünschten, konstanten Wechselspannung eine Kompensationswechselspannung so hinzuzuaddieren, dass der aktuelle Spannungsabfall über der Zuleitung 2 genau kompensiert wird, so dass an der Last 1 exakt die gewünschte Wechselspannung ankommt, muss neben dem Betrag |l| des zu der Last fließenden Wechselstroms auch dessen Phasenwinkel phi berücksichtigt werden. Darüber hinaus müssen der ohmsche Widerstand R und der induktive Widerstand ωL der Zuleitung 2 bekannt sein. Zwar können |l| und phi an der Spannungsquelle 3 bestimmt werden. Es ist jedoch nicht trivial, die Werte R und ωL der Zuleitung auf einfache Weise zu ermitteln. Selbst wenn diese Werte R und ωL bekannt wären, wäre eine exakt vektorielle Festlegung der Kompensationsspannung gemäß dem Vektordiagramm von Fig. 2 aufwändig.

Überraschenderweise stellt sich jedoch heraus, dass eine Kompensationswechselspannung U_{Komp} nach den folgenden Regeln festgelegt werden kann und dass damit die Wechselspannung U_{Last} an der Last 1 in einem sehr kleinen Fenster um einen vorgegebenen gewünschten Wert der Wechselspannung gehalten werden kann. Die Kompensationswechselspannung U_{Komp} weist dabei zwei Summanden |I|*C_{R}*cos(phi) und |l|*C_{L}*sin(phi) auf. Der erste Summand entspricht der Länge des Vektor l*R, d.h. dem ohmschen Anteil des Spannungsabfalls über die Zuleitung 2 in Richtung der Ausgangswechselspannung U_{ges} der Spannungsquelle 3. Der zweite Summand entspricht der Länge des Vektors |I|*ωL, d.h. dem induktiven Anteil des Spannungsabfalls über der Zuleitung 2, in eben dieser Richtung. Wenn C_{R} gleich R und C_{L} gleich ωL ist, weist die derart festgelegte Kompensationsspannung U_{Komp} eine Ungenauigkeit auf, weil zwischen U_{ges} und U_{Last} ein Phasenwinkel 4 vorliegt. Dieser Phasenwinkel 4 ist jedoch klein, so dass sich dieser Fehler nicht signifikant bemerkbar macht. Überdies tritt dieser selbe Fehler auch bei der Festlegung der Konstanten C_{R} und C_{L} auf, wie sie bei dem neuen Verfahren der Festlegung der Kompensationsspannung U_{Komp} durch die beiden oben angegebenen Summanden vorausgeht.

Um C_{R} festzulegen, wird an der Stelle der Last 1, die typischerweise ebenfalls einen ohmschen Widerstandsanteil und einen induktiven Widerstandsanteil und möglicherweise zusätzlich einen kapazitiven Widerstandsanteil aufweist, eine rein ohmsche Last, d.h. ein ohmscher Widerstand angeschlossen. Die Größe des ohmschen Widerstands ist an sich nicht kritisch. Er sollte jedoch etwa in dem Verhältnis zu dem ohmschen Widerstand R der Zuleitung 2 stehen, wie die gewünschte Wechselspannung zur Versorgung der Last 1 zu dem Spannungsabfall über der Zuleitung 2. Durch die rein ohmsche Last an der Stelle der Last 1 geht der Phasenwinkel phi gegen null, weil der induktive Widerstand ωL der Zuleitung 2 allein nicht ausreichend ist, um einen signifikanten Phasenwinkel phi zwischen der Gesamtspannung U_{ges} und dem Strom l hervorzurufen. Damit wird der Spannungsabfall über der Zuleitung 2 nahezu ausschließlich von dem ohmschen Widerstandsanteil l*R bestimmt. So kann durch Messung von U_{ges} und U_{Last} sowie l ein Wert für die Konstante C_{R} bestimmt werden, der nahe an den ohmschen Widerstand R der Zuleitung 2 herankommt. Konkret wird die Konstante C_{R} zu (|U_{ges}| |U_{Last}|)/|I|bestimmt.

Im nächsten Schritt wird die Konstante C_{L} aus der schon ermittelten Konstante C_{R} und neuen Messwerten bestimmt, die bei einer gemischten ohmschem und induktiven Last an der Stelle der Last 1 gewonnen werden. Die gemischte ohmsche und induktive Last kann die reale Last 1 sein. In jedem Fall wird sie so gewählt, dass ihr induktiver Widerstandsanteil einen signifikanten Phasenwinkel phi hervorruft, so dass cos(phi) beispielsweise in der Größenordnung von 0,8 liegt. Bei dieser Last werden jetzt die Beträge von U_{ges}, U_{Last}, I und phi gemessen. Dann wird C_{L} zu [|U_{ges}| |U_{Last}| - C_{R} * |I| * cos(phi)]/[|I| * sin(phi)] bestimmt. Dies entspricht der Ermittlung von ωL aus dem Vektordiagramm gemäß Fig. 2 ohne Berücksichtigung des Phasenwinkels 4 zwischen Uges und U_{Last} und unter der Annahme, dass C_{R} tatsächlich gleich R ist. Mit den derart festgelegten Werten ergibt sich durch Berechnung der obigen Summanden aber tatsächlich einen Kompensationsspannung, welche über einen weiten Varianzbereich der Last 1 dafür sorgt, dass die Last 1 mit einer in engen Grenzen konstanten Wechselspannung U_{Last} versorgt wird. Mit anderen Worten sind die Annahmen und Näherungen, die der Vorgehensweise des neuen Verfahrens zugrunde liegen, unschädlich. Zum Teil heben sie sich sicher dadurch auf, dass sowohl bei der Festlegung der Konstanten, insbesondere von C_{L} als Maß für den induktiven Widerstand ωL, als auch bei der späteren Festlegung der Kompensationsspannung der Phasenwinkel 4 zwischen U_{ges} und U_{Last} keine Berücksichtigung findet. Soweit der Phasenwinkel 4 dabei ungefähr gleich groß ist, kompensieren sich die resultierenden Ungenauigkeiten sowieso fast vollständig. Sie sind aber auch insgesamt nur sehr gering, weil der Phasenwinkel 4 viel kleiner als phi ist. Bei einer Zuleitung 2, deren Widerstandseigenschaften sich nicht ändern, kann mit der Kompensationsspannung aus dem oben angegebenen Summanden der Betrag der Spannung U_{Last} über eine sehr große Varianz der Last 1 mit einem viel kleineren Fehler, als in den üblichen Anwendungen zulässig ist, konstant gehalten werden. Dabei wird die Kompensationswechselspannung optimal berechnet, wenn die Konstanten C_{R} und C_{L} unter solchen Bedingungen bestimmt wurden, bei denen U_{Last} bereits ungefähr gleich der gewünschten Wechselspannung an der Last war. Dies kann beispielsweise dadurch erreicht werden, dass zunächst Näherungswerte für C_{R} und C_{L} gewonnen werden, indem der Betrag von U_{ges} gleich der gewünschten Wechselspannung gesetzt wird. Mit diesen Näherungswerten wird dann ein Wert für U_{ges} bestimmt, um zumindest C_{L} unter Bedingungen nachzumessen, bei denen U_{Last} ungefähr gleich der gewünschten Wechselspannung ist. Das neue Verfahren kann mit relativ einfachem Aufwand implementiert werden, da es nach der Festlegung der Konstanten C_{R} und C_{L} mit Messungen U_{ges} und l auskommt, weil sich hieraus durch punktweise Multiplikation einerseits und Multiplikation der Effektivwerte andererseits auch der Phasenwinkel phi bestimmen lässt. Die Berechnung der Kompensationsspannung aus den beiden oben angegebenen Summanden ist offensichtlich noch einfacher.

### BEZUGSZEICHENLISTE

- 01: Last
- 02: Zuleitung
- 03: Spannungsquelle
- 04: Phasenwinkel

## Patentansprüche

1. Verfahren zur Versorgung einer entfernt von einer Spannungsquelle angeordneten, variablen Last mit einer konstanten Wechselspannung, wobei ein Spannungsabfall über eine elektrische Zuleitung, die die Last mit der Spannungsquelle verbindet, durch eine Kompensationswechselspannung kompensiert wird, die zu der konstanten Wechselspannung hinzuaddiert die Ausgangswechselspannung der Spannungsquelle ergibt und deren Höhe in Abhängigkeit von dem Betrag des zu der Last fließenden Wechselstroms variiert wird, **dadurch gekennzeichnet, dass** die Höhe der Kompensationswechselspannung zusätzlich in Abhängigkeit von dem Phasenwinkel phi zwischen der Ausgangswechselspannung der Spannungsquelle und dem Wechselstrom variiert wird.

2. Verfahren nach Anspruch 1, **dadurch gekennzeichnet, dass** die Kompensationswechselspannung zwei von dem Betrag des Wechselstroms linear abhängige Summanden aufweist, von denen der eine zusätzlich linear von cos(phi) und der andere zusätzlich linear von sin(phi) abhängt.

3. Verfahren nach Anspruch 2, **dadurch gekennzeichnet, dass** eine erste Konstante C_{R} für die lineare Variation der Kompensationsspannung mit dem Betrag des Wechselstroms und cos(phi) gewonnen wird, indem bei einer ohmschen Last an der Stelle der variablen Last der Betrag der von der Spannungsquelle abgegebenen Ausgangswechselspannung |U_{ges}|, der Betrag der über der ohmschen Last abfallenden Wechselspannung |U_{Last}| und der Betrag des dabei fließenden Wechselstroms |l| bestimmt werden.

4. Verfahren nach Anspruch 3, **dadurch gekennzeichnet, dass** die Konstante C_{R} zu (|U_{ges}|-|U_{Last}|)/|l| bestimmt wird.

5. Verfahren nach Anspruch 3 oder 4, **dadurch gekennzeichnet, dass** eine zweite Konstante C_{L} für die lineare Variation der Kompensationsspannung mit dem Betrag des Wechselstroms und sin(phi) gewonnen wird, indem bei einer gemischten ohmschen und induktiven Last an der Stelle der variablen Last der Betrag der von der Spannungsquelle abgegebenen Ausgangswechselspannung |U_{ges}|, der Betrag der über der ohmschen Last abfallenden Wechselspannung |U_{Last}|, der Betrag des dabei fließenden Stroms |l| und der Phasenwinkel phi bestimmt werden.

6. Verfahren nach Anspruch 5, **dadurch gekennzeichnet, dass** die Konstante C_{L} zu [|U_{ges}|-|U_{Last}|-C_{R}*|l|*cos(phi)]/[|I|*sin(phi)] bestimmt wird

7. Verfahren nach Anspruch 5 oder 6, **dadurch gekennzeichnet, dass** zumindest die Konstante C_{L} bei einem Wert von |U_{Last}| festgelegt wird, der ungefähr gleich der konstanten Wechselspannung ist.

8. Verfahren nach Anspruch 7, **dadurch gekennzeichnet, dass** die Konstanten C_{R} und C_{L} zunächst bei einem Wert von |U_{ges}| genähert werden, der ungefähr gleich der konstanten Wechselspannung ist, und dann mit den genäherten Werten der Wert von |U_{Last}| angefahren wird, der gleich der konstanten Wechselspannung ist.

9. Verfahren nach einem der Ansprüche 1 bis 8, **dadurch gekennzeichnet, dass** die Spannungsquelle ein rotierender Frequenzumformer ist, bei dem die Erregerleistung eines Generators zur Variation der Kompensationswechselspannung variiert wird.

10. Verfahren nach einem der Ansprüche 1 bis 8, **dadurch gekennzeichnet, dass** die Spannungsquelle ein statischer Frequenzumformer oder ein elektronisch geregelter Transformator ist, bei denen die Kompensationswechselspannung für jede Phase der Wechselspannung getrennt variiert wird.
